# EUROPÄISCHE PATENTANMELDUNG

(11) **EP 4 796 260 A2**
(43) Veröffentlichungstag der Anmeldung: **26.08.2026**
(21) Anmeldenummer: 26160335.1
(22) Anmeldetag: 24.02.2026
(51) Int. Cl.: B25F 5/00, H01M 10/613, H01M 10/623

(54) **ANORDNUNG UMFASSEND EIN MOBILES, ELEKTRISCHES ARBEITSGERÄT UND WENIGSTENS EINEN AKKUPACK SOWIE EINE KÜHLEINRICHTUNG FÜR DEN AKKUPACK**

(30) Priorität: 25.02.2025 DE 102025107034
(71) Anmelder: Einhell Germany AG, 94405 Landau / Isar (DE)
(72) Erfinder: Stempfhuber, Johannes, 94437 Mamming (DE); Wippenbeck, Mathias, 84168 Aham (DE); Fech, Daniel, 86647 Buttenwiesen (DE)
(74) Vertreter: Canzler & Bergmeier Patentanwälte Partnerschaft mbB

(57) **Zusammenfassung**

Eine Anordnung (1) umfasst ein mobiles, elektrisches Arbeitsgerät (2), insbesondere eine elektrische Handwerkzeugmaschine zur Durchführung von Garten-, Reinigungsoder Handwerksarbeiten, mit einer Geräteschnittstelle (3) zur lösbaren Verbindung mit einer Akkuschnittstelle (4) eines Akkupacks (5),
wenigstens einen vorzugsweise wasserdichten Akkupack (5), wobei der Akkupack (5) eine Vielzahl von Akkuzellen (6), welche in einem Zellenträger (7) in einem Akkugehäuse (8) aufgenommen sind, eine Leiterplatte (9) sowie eine Akkuschnittstelle (4) zur lösbaren Verbindung mit der Geräteschnittstelle (3) des elektrischen Arbeitsgerätes (2) aufweist, sowie eine Kühleinrichtung (10) für den Akkupack (5). Die Kühleinrichtung (10) weist wenigstens einen in dem Akkupack (5) angeordneten Wärmeüberträger (11) mit einem Verdampfungs- und Kondensationskreislauf, insbesondere eine Heatpipe, auf, wobei ein Verdampfer (12) des Wärmeüberträgers (11) zur Aufnahme von Wärme in einem wärmebelasteten Bereich im Inneren des Akkupacks (5) angeordnet ist und wobei ein Kondensator (13) des Wärmeüberträgers (11) zur Abgabe der aufgenommenen Wärme im Bereich der Akkuschnittstelle (4) angeordnet ist. Die Kühleinrichtung (10) weist wenigstens eine an oder in dem mobilen, elektrischen Arbeitsgerät (2) angeordnete Einrichtung zur Wärmeabfuhr (14) von dem Kondensator (13) des Wärmeüberträgers (11) auf.

## Beschreibung

Die vorliegende Erfindung betrifft eine Anordnung umfassend ein mobiles, elektrisches Arbeitsgerät, insbesondere eine elektrische Handwerkzeugmaschine zur Durchführung von Garten-, Reinigungs- oder Handwerksarbeiten, mit einer Geräteschnittstelle zur lösbaren Verbindung mit einer Akkuschnittstelle eines Akkupacks, wenigstens einen vorzugsweise wasserdichten Akkupack, wobei der Akkupack eine Vielzahl von Akkuzellen, welche in einem Zellenträger in einem Akkugehäuse aufgenommen sind, eine Leiterplatte sowie eine Akkuschnittstelle zur lösbaren Verbindung mit der Geräteschnittstelle des elektrischen Arbeitsgerätes aufweist, sowie eine Kühleinrichtung für den Akkupack. Weiterhin betrifft die Erfindung einen Akkupack, vorzugsweise wasserdichten Akkupack, für ein mobiles, elektrisches Arbeitsgerät, wobei der Akkupack eine Vielzahl von Ackuzellen, welche in einem Zellenträger in einem Akkugehäuse aufgenommen sind, eine Leiterplatte sowie eine Akkuschnittstelle zur lösbaren Verbindung mit einer Geräteschnittstelle des elektrischen Arbeitsgerätes aufweist, sowie mit Teilen einer Kühleinrichtung für den Akkupack. Zudem betrifft die Erfindung ein mobiles, elektrisches Arbeitsgerät, insbesondere eine elektrische Handwerkzeugmaschine zur Durchführung von Garten-, Reinigungs- oder Handwerksarbeiten, mit einer Geräteschnittstelle zur lösbaren Verbindung mit einer Akkuschnittstelle eines Akkupacks sowie mit Teilen einer Kühleinrichtung für den Akkupack.

Die genannten elektrischen Arbeitsgeräte sind auch als Power Tools bekannt und können sowohl als Handwerkzeuge wie zum Beispiel Akkuschrauber, Schleifmaschinen, elektrische Sägen oder dergleichen oder auch als Gartengeräte wie beispielsweise Astscheren, Häcksler, Rasenmäher oder Vertikutierer oder auch sonstige Arbeitsgeräte ausgeführt sein. Um die genannten Arbeitsgeräte mit ausreichend elektrischer Energie zu versorgen, können ein oder mehrere entsprechend leistungsfähige Akkupacks vorgesehen sein, welche mehrere Akkuzellen beinhalten. Aufgrund des Entladestromes entsteht dabei in den Akkupacks eine beträchtliche Wärmeentwicklung. Kann diese Wärme nicht abgeführt werden, so schaltet das Arbeitsgerät in der Regel ab, um eine Überhitzung des Akkupacks zu verhindern. Zudem sind auch bereits verschiedene Verfahren bekannt geworden, um Akkupacks solcher Arbeitsgeräte zu kühlen.

Aus der EP 3 767 732 B1 ist beispielsweise ein Akkupack für eine Handwerkzeugmaschine bekannt, bei welchem ein Zwischenraum zwischen einem Zellenträger und den darin aufgenommenen Akkus durch eine Vergussmasse ausgefüllt ist. Die Vergussmasse ist thermisch leitfähig, sodass die Wärmeableitung aus dem Akkupack erleichtert wird. In dem Zellenträger ist weiterhin ein Kühlraum ausgebildet, welcher über Belüftungsöffnungen im Austausch mit der Umgebung steht, so dass er von Kühlluft durchströmt werden kann.

Aufgabe der vorliegenden Erfindung ist es, eine Anordnung mit einem mobilen elektrischen Arbeitsgerät, einem Akkupack und einer Kühleinrichtung für den Akkupack vorzuschlagen, welche eine verbesserte Wärmeabfuhr aus dem Akkupack erlaubt. Weiterhin sollen ein entsprechender Akkupack sowie ein entsprechendes mobiles Arbeitsgerät vorgeschlagen werden.

Die Aufgabe wird gelöst durch eine Anordnung, einen Akkupack sowie ein mobiles elektrisches Arbeitsgerät mit den Merkmalen der unabhängigen Patentansprüche.

Eine Anordnung umfasst ein mobiles, elektrisches Arbeitsgerät, insbesondere eine elektrische Handwerkzeugmaschine zur Durchführung von Garten-, Reinigungs- oder Handwerksarbeiten, mit einer Geräteschnittstelle zur lösbaren Verbindung mit einer Akkuschnittstelle eines Akkupacks, wenigstens einen vorzugsweise wasserdichten Akkupack, wobei der Akkupack eine Vielzahl von Akkuzellen, welche in einem Zellenträger in einem Akkugehäuse aufgenommen sind, eine Leiterplatte sowie eine Akkuschnittstelle zur lösbaren Verbindung mit der Geräteschnittstelle des elektrischen Arbeitsgerätes aufweist, sowie eine Kühleinrichtung für den Akkupack.

Für eine solche Anordnung wird vorgeschlagen, dass die Kühleinrichtung wenigstens einen in dem Akkupack angeordneten Wärmeüberträger mit einem Verdampfungs- und Kondensationskreislauf aufweist, wobei ein Verdampfer des Wärmeüberträgers zur Aufnahme von Wärme in einem wärmebelasteten Bereich im Inneren des Akkupacks angeordnet ist und wobei ein Kondensator des Wärmeüberträgers zur Abgabe der aufgenommenen Wärme im Bereich der Akkuschnittstelle angeordnet ist. Die Kühleinrichtung weist dabei wenigstens eine an oder in dem mobilen, elektrischen Arbeitsgerät angeordnete Einrichtung zur Wärmeabfuhr von dem Kondensator des Wärmeüberträgers auf.

Ein Wärmeüberträger mit einem Verdampfungs- und Kondensationskreislauf, allgemein auch als Wärmerohr bekannt, ermöglicht bei einem sehr geringen Platzbedarf einen besonders hohen Wärmetransport und erlaubt es deshalb, Wärme auch aus dem Inneren des Akkupacks beziehungsweise aus den wärmebelasteten Bereichen des Akkupacks zuverlässig an die Außenseite des Akkupacks zu transportieren, von wo aus eine Wärmeabfuhr leichter möglich ist. Gemäß der Erfindung wird die Wärme mittels des Wärmeüberträgers mit einem Verdampfungs- und Kondensationskreislauf aus dem Inneren des Akkupacks in den Bereich der Akkuschnittstelle transportiert. Die Wärme wird sodann nicht nur einfach an die Umgebung abgegeben, sondern durch eine Einrichtung zur Wärmeabfuhr des mobilen, elektrischen Arbeitsgeräts gezielt gekühlt, so dass eine besonders effiziente Wärmeabfuhr möglich ist. Die Einrichtung zur Wärmeabfuhr wird im Folgenden noch näher spezifiziert und kann beispielsweise ein Gebläse, ein Fluidkühlsystem, insbesondere einen Kühlkreislauf, oder Ähnliches umfassen.

Nach einer bevorzugten Ausführung ist der Wärmeüberträger als Heatpipe ausgebildet. Bei einer solchen Heatpipe wird das kondensierte Kältemittel bzw. Arbeitsfluid mittels eines Dochtes zurück zum Verdampfer geführt, so dass die Heatpipe lageunabhängig arbeiten kann. Die Verwendung einer
Heatpipe als Wärmeüberträger ist daher insbesondere für handgeführte Arbeitsgeräte, deren Lage sich im Gebrauch ändern kann, vorteilhaft. Für Arbeitsgeräte, deren Lage sich während des Betriebes nicht oder nur wenig verändert, ist es jedoch ebenso möglich ein schwerkraftgetriebenes Wärmerohr einzusetzen. Dies kommt beispielsweise für Arbeitsgeräte wie Rasenmäher oder Vertikutierer in Frage. Der Wärmeüberträger mit einem Verdampfungs- und Kondensationskreislauf bzw. das Wärmerohr muss dabei nicht unbedingt in Form eines Rohres ausgebildet sein. Eine schlauchartige Ausführung oder ein im Inneren des Gehäuses des Akkupacks oder auch direkt durch das Gehäuse ausgebildeter Kanal kann ebenfalls als "Wärmerohr" bzw. als Wärmeüberträger mit einem Verdampfungs- und Kondensationskreislauf fungieren. Wesentlich ist lediglich, dass der Wärmetransport in dem Wärmeüberträger auf der Nutzung von Verdampfungswärme eines Mediums bzw. Kühlmittels basiert.

Besonders vorteilhaft kann die Erfindung in Verbindung mit wasserdichten Akkupacks eingesetzt werden, weil, anders als bei der Kühlung durch einen Luftstrom, keinerlei Öffnungen im Gehäuse des Akkupacks erforderlich sind. Funktionsbeeinträchtigungen des Akkupacks und Beschädigungen der Elektronik des Akkupacks aufgrund von eingedrungenen Verunreinigungen können hierdurch vermieden werden.

Dieselben Vorteile können auch mit einem Akkupack, insbesondere einem wasserdichten Akkupack, für ein mobiles elektrisches Arbeitsgerät erzielt werden, für welchen ebenfalls Schutz beansprucht wird. Der Akkupack weist wie beschrieben eine Vielzahl von Akkuzellen auf, welche in einem Zellen Träger in einem Akkugehäuse aufgenommen sind, eine Leiterplatte sowie eine Akkuschnittstelle zur lösbaren Verbindung mit einer Geräteschnittstelle des elektrischen Arbeitsgeräts. Als Teil einer Kühleinrichtung für den Akkupack ist in dem Akkupack wenigstens ein Wärmeüberträger mit einem Verdampfungs- und Kondensationskreislauf, insbesondere eine Heatpipe, angeordnet. Ein Verdampfer des Wärmeüberträgers ist zur Aufnahme von Wärme in einem wärmebelasteten Bereich im Inneren des Akkupacks angeordnet und ein Kondensator des Wärmeüberträgers ist zur Abgabe der aufgenommenen Wärme im Bereich der Akkuschnittstelle angeordnet.

Dieselben Vorteile können zudem auch mit einem mobilen, elektrischen Arbeitsgerät erzielt werden, welches eine Geräteschnittstelle zur lösbaren Verbindung mit einer Akkuschnittstelle eines Akkupacks aufweist. Als Teil einer Kühleinrichtung für den Akkupack weist das Arbeitsgerät wenigstens eine Einrichtung zur Wärmeabfuhr im Bereich der Geräteschnittstelle auf.

Vorteilhaft ist es bei der Anordnung und bei dem Akkupack, wenn der wärmebelastete Bereich wenigstens ein die Akkuzellen elektrisch kontaktierendes Leiterblech umfasst. Im Bereich dieser Kontaktstellen findet in der Regel eine besonders hohe Wärmeentwicklung statt. Durch die Anordnung des Verdampfers des Wärmeüberträgers im Bereich der Kontaktstellen kann die entstehende Wärme somit besonders effektiv abgeführt werden.

Vorteile bringt es bei der Anordnung und bei dem Akkupack auch mit sich, wenn die Leiterplatte zwischen den Akkuzellen und der Akkuschnittstelle angeordnet ist und die Leiterplatte eine Aussparung aufweist, durch welche der Wärmeüberträger mit einem Verdampfungs- und Kondensationskreislauf hindurchgeführt ist. Der Wärmeüberträger und die ganze gesamte Kühleinrichtung für den Akkupack können hierdurch konstruktiv einfach gehalten werden. Es ist jedoch auch möglich, den Wärmeüberträger außen an der Leiterplatte vorbeizuführen, um ihn in den Bereich der Akkuschnittstelle zu führen.

Des Weiteren ist es bei der Anordnung und bei dem Akkupack vorteilhaft, wenn der Wärmeüberträger eine äußere Wärmeisolierung umfasst. Angrenzende Bauteile wie die Leiterplatte mitsamt deren empfindlicher Elektronik, aber auch andere Bauteile, können hierdurch vor Hitze geschützt werden. Insbesondere, wenn der Wärmeüberträger durch eine Aussparung der Leiterplatte geführt ist, ist dies vorteilhaft.

Vorteilhaft ist es bei der Anordnung und bei dem Akkupack auch, wenn im Bereich der Akkuschnittstelle ein Wärmeleitelement angeordnet ist, welches die aufgenommene Wärme von dem Kondensator an eine Außenseite der Akkuschnittstelle und/oder an die Einrichtung zur Wärmeabfuhr an oder in dem mobilen, elektrischen Arbeitsgerät weiterleitet. Das Wärmeleitelement kann hierdurch sowohl die Kühlung des Kondensators des Wärmeüberträgers unterstützen, als auch die vom Wärmeüberträger abgegebene Wärme effektiv in den Bereich der Einrichtung zur Wärmeabfuhr des mobilen Arbeitsgerätes transportieren.

Ebenso ist es bei der Anordnung und bei dem Arbeitsgerät vorteilhaft, wenn die Einrichtung zur Wärmeabfuhr an oder in dem mobilen, elektrischen Arbeitsgerät einen zumindest im Betrieb des Arbeitsgerätes mit einem Kühlluftstrom beaufschlagten Luftführungskanal umfasst. Hierdurch kann eine effektive Kühlung des Kondensators des Wärmeüberträgers und damit des Akkupacks erfolgen. Der Kühlluftstrom kann dabei vorzugsweise ein im Betrieb des Arbeitsgeräts ohnehin vorhandener Kühlluftstrom oder Arbeitsluftstrom sein. Es kann jedoch auch ein Kühlluftstrom ausgebildet werden, welcher lediglich der Kühlung der Akkuschnittstelle dient. Der Kühlluftstrom kann dabei, je nach Anordnung der den Kühlluftstrom generierenden Einrichtung, als Blasluftstrom oder als Saugluftstrom ausgebildet sein.

Vorteile bringt es bei der Anordnung und bei dem Arbeitsgerät mit sich, wenn die Einrichtung zur Wärmeabfuhr an oder in dem mobilen, elektrischen Arbeitsgerät einen Lüfter als Strömungserzeuger zur Erzeugung des Kühlluftstroms umfasst. Dieser kann entweder mit einem eigenen Lüftermotor oder durch einen ohnehin vorhandenen Arbeitsantrieb des Arbeitsgeräts angetrieben werden.

Nach einer anderen Ausführung ist es bei der Anordnung und bei dem Arbeitsgerät vorteilhaft, wenn die Einrichtung zur Wärmeabfuhr an oder in dem mobilen, elektrischen Arbeitsgerät eine Venturidüse als Strömungserzeuger zur Erzeugung des Kühlluftstroms umfasst. Eine Venturidüse kann insbesondere dann vorteilhaft eingesetzt werden, wenn an dem Arbeitsgerät ohnehin ein Arbeitsluftstrom oder Kühlluftstrom zumindest während des Betriebs vorhanden ist.

Die Einrichtung zur Wärmeabfuhr muss jedoch nicht unbedingt einen Kühlluftstrom beinhalten. Auch ein anderes Fluidkühlsystem, beispielsweise eine Flüssigkeitskühlung, insbesondere eine Wasserkühlung, ist bei der Anordnung und bei dem Arbeitsgerät denkbar. Das Fluidkühlsystem kann dabei auch als geschlossener Kühlkreislauf ausgebildet sein. Vorteilhaft dabei ist es, dass auch das Arbeitsgerät ohne Öffnungen nach außen hin ausgebildet sein kann und somit vor dem Eindringen von Verschmutzungen geschützt ist. Das Fluidkühlsystem kann beispielsweise über eine Pumpe als Strömungserzeuger verfügen.

Ebenso ist es bei der Anordnung und bei dem Arbeitsgerät vorteilhaft, wenn die Einrichtung zur Wärmeabfuhr an oder in dem mobilen, elektrischen Arbeitsgerät ein zumindest teilweise im Bereich der Geräteschnittstelle angeordnetes (weiteres) Wärmeleitelement umfasst. Mittels dieses Wärmeleitelements kann die über die Geräteschnittstelle von der Akkuschnittstelle aufgenommene Wärme weitertransportiert werden zu einem Ort, von welchem sie gegebenenfalls besser abgeführt werden kann. Beispielsweise kann mittels eines solchen Wärmeleitelements die aufgenommene Wärme einem Kühlkörper zugeführt werden. Dieser kann beispielsweise bis an die Außenseite des Gehäuses des Arbeitsgerätes reichen und mit Kühlrippen versehen sein. Dies ist insbesondere bei größeren Arbeitsgeräten wie beispielsweise Rasenmähern, Vertikutierern und ähnlichen denkbar, deren Gehäuse eine große Oberfläche besitzen. Ebenso könnte mittels des Wärmeleitelements die Wärme in den Bereich des Kühlluftstromes und/oder in den Bereich eines ohnehin vorhandenen Kühlkanals geführt werden.

Vorteile bringt es zudem bei der Anordnung und bei dem Arbeitsgerät mit sich, wenn die Einrichtung zur Wärmeabfuhr an oder in dem mobilen, elektrischen Arbeitsgerät einen (weiteren) Wärmeüberträger mit einem Verdampfungs- und Kondensationskreislauf, insbesondere eine Heatpipe, aufweist. Wie zuvor zu dem Wärmeleitelement beschrieben, kann hierdurch die aufgenommene Wärme zu einem Ort weitertransportiert werden, von welchem sie gegebenenfalls besser abgeführt werden kann. Vorzugsweise führt der weitere Wärmeüberträger die aufgenommene Wärme dem Kühlkörper oder einem Luftführungskanal bzw. einem Kühlluftstrom im Inneren des Arbeitsgerätes zu.

Weiterhin wird eine Anordnung wie eingangs beschrieben vorgeschlagen, bei welcher die Kühleinrichtung für den Akkupack an dem Arbeitsgerät ein Fluidkühlsystem umfasst. An dem Akkupack umfasst die Kühleinrichtung zum Anschluss an das Fluidkühlsystem des Arbeitsgeräts eine Einströmöffnung und eine Ausströmöffnung für ein Kühlfluid. Die Anordnung kann dabei eine Anordnung aus einem mobilen, elektrischen Arbeitsgerät und einem Akkupack oder auch eine Anordnung aus einem Ladegerät für einen Akkupack und dem Akkupack sein. Bei der Anordnung weist der Akkupack wenigstens ein elektrisch ansteuerbares Ventil zum Verschließen der Einströmöffnung und/oder der Ausströmöffnung auf. Der Akkupack weist weiterhin eine Steuereinheit zur Ansteuerung des wenigstens einen Ventils und eine Detektionseinrichtung auf, welche detektiert, ob die Akkuschnittstelle des Akkupacks an die Geräteschnittstelle des Arbeitsgeräts oder des Ladegeräts angeschlossen ist. Die Steuereinheit ist ausgebildet, das wenigstens eine Ventil zu schließen, wenn durch die Detektionseinrichtung kein Arbeitsgerät oder Ladegerät erkannt wird und das wenigstens eine Ventil zu öffnen, wenn durch die Detektionseinrichtung ein Arbeitsgerät oder Ladegerät erkannt wird.

Durch das wenigstens eine elektrisch ansteuerbare Ventil wird die Einströmöffnung und/oder die Ausströmöffnung lediglich dann geöffnet, wenn der Akkupack an das Arbeitsgerät oder das Ladegerät angeschlossen ist. Der Akkupack kann hierdurch an das Fluidkühlsystem des Arbeitsgeräts oder Ladegeräts angeschlossen werden und wird hierdurch ebenfalls von dem Kühlfluid durchströmt und hierdurch gekühlt. Sobald der Akkupack aus der Anordnung gelöst wird, wird die Einströmöffnung und/oder die Ausströmöffnung durch das Ventil automatisch geschlossen. Hierdurch kann der Akkupack ebenfalls zuverlässig vor dem Eindringen von Verunreinigungen geschützt werden. Insbesondere bei der Ausströmöffnung kann es jedoch auch ausreichend sein, das Ventil federbelastet und selbstschließend auszuführen. Beispielsweise kann sich das Ausströmventil durch das Ausströmen des Kühlfluids selbsttätig entgegen der Federkraft öffnen und bei Abbrechen des Fluidstromes, wenn der Akkupack vom Arbeitsgerät oder Ladegerät entfernt wurde, selbsttätig aufgrund der Federkraft schließen. Je nach Ausführung des Fluidkühlsystems kann auch hier der Akkupack in vorteilhafter Weise wasserdicht ausgeführt sein.

Das Fluidkühlsystem kann wie bereits zuvor beschrieben als Luftkühlsystem ausgebildet sein oder auch als Flüssigkeitskühlung, insbesondere als Wasserkühlung. Wie im Folgenden noch beschrieben wird, kommen jedoch auch andere Flüssigkeiten, insbesondere dielektrische Flüssigkeiten in Frage. Auch Gase oder Kältemittel kommen für das Fluidkühlsystem in Frage. Das Fluidkühlsystem kann dabei auch als geschlossener Kühlkreislauf ausgebildet sein. Vorteilhaft dabei ist es, dass das Arbeitsgerät ohne Öffnungen nach außen hin ausgebildet sein kann und somit vor dem Eindringen von Verschmutzungen geschützt ist. Das Fluidkühlsystem kann beispielsweise über eine Pumpe oder einen Lüfter als Strömungserzeuger verfügen.

Dieselben Vorteile können auch mit einem entsprechenden Akkupack erzielt werden, welcher eine Akkuschnittstelle zur lösbaren Verbindung mit einer Geräteschnittstelle eines elektrischen Arbeitsgerätes oder eines Ladegerätes aufweist und welcher ebenfalls beansprucht wird. Der Akkupack kann in vorteilhafter Weise auch als wasserdichter Ackupack ausgebildet sein.

Die oben beschriebene Ausführung der Anordnung und des Akkupacks, bei welcher der Akkupack wenigstens ein elektrisch ansteuerbares Ventil zum Verschließen der Einströmöffnung und/oder der Ausströmöffnung aufweist und bei welcher das Arbeitsgerät oder das Ladegerät ein Fluidkühlsystem aufweist, kann zusätzlich zu der erstgenannten Ausführung der Anordnung, des Akkupacks und des Arbeitsgerätes zum Einsatz kommen. Die beschriebene Ausführung besitzt jedoch auch eine selbstständige, erfinderische Bedeutung.

Vorteilhaft ist es bei der Anordnung und dem Akkupack, wenn der Akkupack einen oder mehrere Kühlkanäle für das Durchströmen des Kühlfluids aufweist. Durch die Kühlkanäle kann das Kühlfluid getrennt von empfindlichen Baugruppen des Akkupacks wie den Akkuzellen und der Leiterplatte gehalten werden. Nach einer vorteilhaften Ausführung ist das Kühlfluid Wasser. Dies ist kostengünstig und leicht verfügbar.

Nach einer anderen Ausführung der Anordnung und des Akkupacks ist es vorteilhaft, wenn das Kühlfluid eine dielektrische Flüssigkeit ist, welche die Akkuzellen und/oder die Leiterplatten in dem Akkupack direkt umspült. Hierdurch kann eine besonders effektive Kühlung des Akkupacks erzielt werden, da das Kühlfluid direkt in die besonders wärmebelasteten Bereiche des Akkupacks geführt werden kann. Da die dielektrische Flüssigkeit nicht leitend ist, wird die Funktion des Akkupacks durch das direkte Umspülen der wärmebelasteten Bereiche nicht beeinträchtigt.

Vorteile bringt es bei der Anordnung zudem mit sich, wenn das Arbeitsgerät oder das Ladegerät eine Zuführöffnung zum Zuführen des Kühlfluids an die Einströmöffnung des Akkupacks und eine Abführöffnung zum Abführen des Kühlfluids von der Ausströmöffnung des Akkupacks aufweist. Somit kann der Fluidstrom vom Arbeitsgerät oder Ladegerät durch den Akkupack hindurch geleitet werden, wenn die Zufuhröffnung mit der Einströmöffnung des Akkupacks und die Abführöffnung mit der Ausströmöffnung des Akkupacks in Überdeckung gebracht werden. Vorzugsweise sind hierzu die Zuführöffnung und die Abführöffnung an einer Geräteschnittstelle des Arbeitsgeräts oder des Ladegeräts angeordnet. Ebenso sind besonders vorteilhaft die Einströmöffnung und die Ausströmöffnung in einer Akkuschnittstelle des Akkupacks angeordnet.

Vorteile bringt es bei der Anordnung zudem mit sich, wenn das Arbeitsgerät oder das Ladegerät wenigstens ein (weiteres) Ventil zum Verschließen der Zuführöffnung und/oder der Abführöffnung aufweist. Hierdurch können sowohl die Zuführöffnung als auch die Abführöffnung zuverlässig verschlossen werden, wenn das Arbeitsgerät oder das Ladegerät nicht mit dem Akkupack verbunden sind. Empfindliche Bauteile im Inneren des Arbeitsgeräts oder Ladegeräts können hierdurch ebenfalls zuverlässig vor eindringenden Verschmutzungen geschützt werden.

Weitere Vorteile der Erfindung sind in den nachfolgenden Ausführungsbeispielen beschrieben. Es zeigen:
- **Figur 1**: Eine Anordnung umfassend ein mobiles, elektrisches Arbeitsgerät und einen Akkupack sowie eine Kühleinrichtung für den Akkupack in einer schematischen Übersichtsdarstellung,
- **Figur 2**: eine Anordnung mit einem Arbeitsgerät und einem Akkupack in einer schematischen, teilweise geschnittenen Darstellung mit einem Wärmeüberträger mit einem Verdampfungs- und Kondensationskreislauf und einer Einrichtung zur Wärmeabfuhr nach einer ersten Ausführung,
- **Figur 3**: einen Akkupack in einer schematischen, teilweise geschnittenen Darstellung mit einem Wärmeüberträger mit einem Verdampfungs- und Kondensationskreislauf nach einer alternativen Ausführung,
- **Figur 4**: einen Akkupack in einer schematischen, teilweise geschnittenen Darstellung mit einem Wärmeüberträger mit einem Verdampfungs- und Kondensationskreislauf nach einer weiteren, alternativen Ausführung,
- **Figur 5**: einen Akkupack in einer schematischen, geschnittenen Darstellung mit einem Wärmeüberträger mit einem Verdampfungs- und Kondensationskreislauf nach einer weiteren, alternativen Ausführung,
- **Figur 6**: eine Anordnung mit einem Arbeitsgerät und einem Akkupack in einer schematischen, teilweise geschnittenen Darstellung mit einer Kühleinrichtung für den Akkupack nach einer weiteren Ausführung,
- **Figur 7**: ein Arbeitsgerät in einer schematischen, geschnittenen, abgebrochenen Darstellung mit einer Einrichtung zur Wärmeabfuhr nach einer weiteren Ausführung,
- **Figur 8**: eine Anordnung mit einem Arbeitsgerät und einem Akkupack in einer schematischen, teilweise geschnittenen Darstellung mit einer Kühleinrichtung für den Akkupack nach einer weiteren Ausführung,
- **Figur 9**: ein Arbeitsgerät in einer schematischen, geschnittenen, abgebrochenen Darstellung mit einer Einrichtung zur Wärmeabfuhr nach einer weiteren Ausführung,
- **Figur 10**: ein Arbeitsgerät in einer schematischen, geschnittenen, abgebrochenen Darstellung mit einer Einrichtung zur Wärmeabfuhr nach einer weiteren Ausführung,
- **Figur 11**: eine Anordnung mit einem Arbeitsgerät oder Ladegerät und einem Akkupack in einer schematischen, teilweise geschnittenen Darstellung mit einer Kühleinrichtung für den Akkupack nach einer alternativen Ausführung, bei welcher das Arbeitsgerät oder Ladegerät über ein Fluidkühlsystem verfügt, sowie
- **Figur 12**: eine Anordnung mit einem Arbeitsgerät oder Ladegerät und einem Akkupack in einer schematischen, teilweise geschnittenen Darstellung mit einer Kühleinrichtung für den Akkupack nach einer weiteren alternativen Ausführung, bei welcher das Arbeitsgerät oder Ladegerät über ein Fluidkühlsystem verfügt.

Bei der nachfolgenden Beschreibung der Ausführungsbeispiele werden identische oder in ihrer Gestaltung und/oder Wirkweise zumindest vergleichbare Merkmale mit gleichen Bezugszeichen versehen. Diese werden meist lediglich bei ihrer erstmaligen Erwähnung detailliert erläutert, während bei den folgenden Ausführungsbeispielen lediglich auf die Unterschiede zu den bereits beschriebenen Ausführungsbeispielen eingegangen wird. Sofern Merkmale nicht nochmals detailliert erläutert werden, entspricht deren Ausgestaltung und/oder Wirkweise der Ausgestaltung und Wirkweise der vorstehend bereits beschriebenen Merkmale. Weiterhin sind aus Gründen der Übersichtlichkeit von mehreren identischen Bauteilen bzw. Merkmalen oftmals nur eines oder nur einige wenige beschriftet.

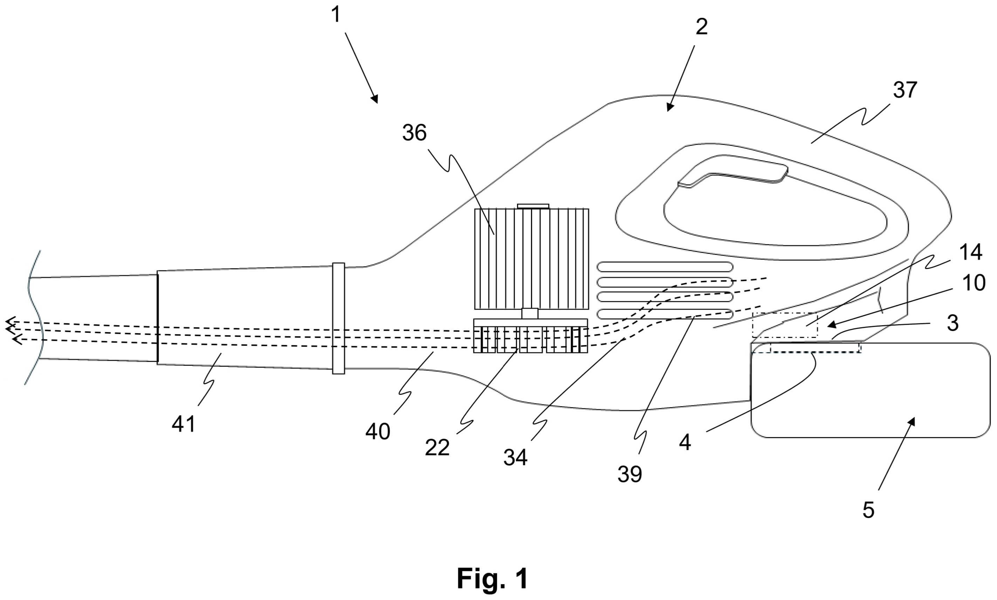

Figur 1 zeigt eine Anordnung 1 in einer schematischen Übersichtsdarstellung. Die Anordnung 1 umfasst ein mobiles, elektrisches Arbeitsgerät 2 und einen Akkupack 5. Das Arbeitsgerät 2 weist eine Geräteschnittstelle 3 auf, die zur lösbaren Verbindung mit einer Akkuschnittstelle 4 des Akkupacks 5 ausgebildet ist.

Wie in Figur 1 weiter dargestellt, umfasst die Anordnung 1 eine Kühleinrichtung 10, die zur effizienten Kühlung des Akkupacks 5 ausgelegt ist. Die Kühleinrichtung 10 umfasst an dem Arbeitsgerät 2 eine Einrichtung zur Wärmeabfuhr 14. Die Kühleinrichtung 10 ist hier lediglich schematisch dargestellt und wird anhand der folgenden Figuren noch näher erläutert.

Das hier gezeigte Arbeitsgerät 2 ist in Form eines Laubbläsers ausgebildet und weist einen Antrieb 36 für einen Lüfter 22 auf, mittels welchem ein Hauptluftstrom 34 erzeugt wird. Im vorliegenden Beispiel des Laubbläsers ist der Hauptluftstrom 34 ein Arbeitsluftstrom, welcher durch Öffnungen 39 des Arbeitsgerätegehäuses 40 hindurch angesaugt wird und über eine Blasdüse 41 des Arbeitsgerätes 2 abgeführt wird. Weiterhin weist das Arbeitsgerät 2 einen Griffabschnitt 37 zum Führen des Arbeitsgeräts 2 auf.

Dies ist jedoch lediglich beispielhaft zu verstehen. Das Arbeitsgerät 2 kann ebenso auch als elektrisches Handwerkszeug, als Gartengerät wie Rasenmäher oder Vertikutierer oder als sonstiges elektrisches, akkubetriebenes Arbeitsgerät 2 ausgeführt sein. Wird in dem Arbeitsgerät 2 zumindest im Betrieb ein Hauptluftstrom 34 erzeugt, so kann dieser mit der Kühleinrichtung 10 für den Akkupack 5 zusammenwirken oder diese ausbilden. Der Hauptluftstrom 34 kann jedoch auch völlig separat von der Kühleinrichtung 10 ausgebildet sein.

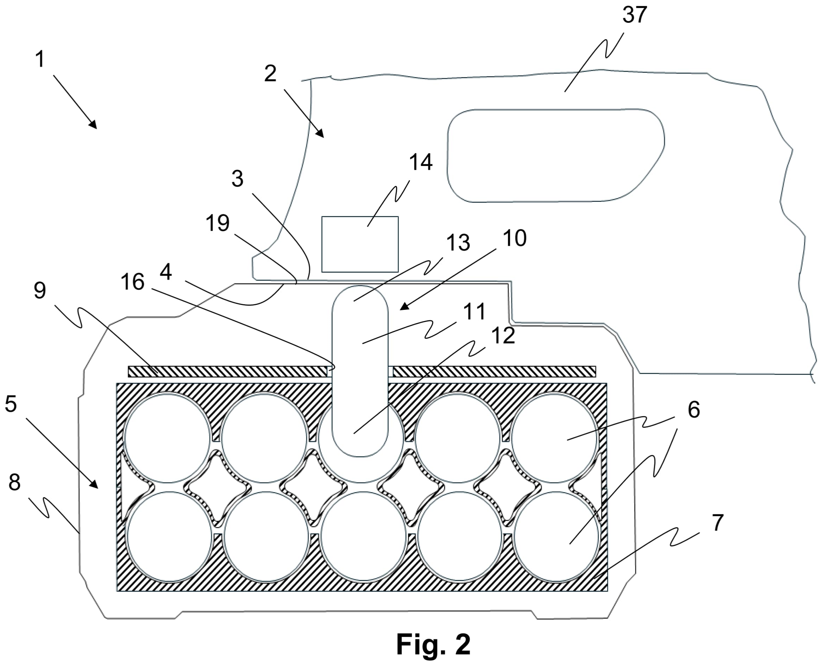

Figur 2 zeigt eine Anordnung 1 umfassend ein mobiles, elektrisches Arbeitsgerät 2 und einen Akkupack 5 in einer schematischen, teilweise geschnittenen Darstellung. Das Arbeitsgerät 2 ist dabei in abgebrochener Darstellung gezeigt und ist hier nicht näher spezifiziert.

Der Akkupack 5 umfasst mehrere Akkuzellen 6, die in einem Zellenträger 7 angeordnet und von einem Akkugehäuse 8 umgeben sind. Im Inneren des Akkupacks 5 ist eine Leiterplatte 9 angeordnet, die sich vorliegend zwischen den Akkuzellen 6 und der Akkuschnittstelle 4 befindet und auf welcher die Elektronik des Akkupacks 5 angeordnet ist. Die Leiterplatte 9 ist elektrisch mit den Akkuzellen 6 verbunden. Die Akkuschnittstelle 4 ist der Leiterplatte 9 zugeordnet und dient zur elektrischen und mechanischen Verbindung mit der Geräteschnittstelle 3 des Arbeitsgeräts 2.

Die Kühleinrichtung 10 für den Akkupack 5 umfasst an dem Akkupack 5 einen Wärmeüberträger 11 mit einem Verdampfungs- und Kondensationskreislauf, allgemein auch als Wärmerohr bekannt. Ein Verdampfer 12 des Wärmeüberträgers 11 ist dabei im Inneren des Akkupacks 5 angeordnet und nimmt Wärme aus einem oder mehreren wärmebelasteten Bereichen im Inneren des Akkupacks 5 auf. Ein Kondensator 13 des Wärmeüberträgers 11 ist im Bereich der Akkuschnittstelle 4 angeordnet und gibt die aufgenommene Wärme dort an der Außenseite 19 der Akkuschnittstelle 4 ab.

An dem Arbeitsgerät 2 umfasst die Kühleinrichtung 10 für den Akkupack 5 eine an oder in dem Arbeitsgerät 2 angeordnete Einrichtung zur Wärmeabfuhr 14. Diese Einrichtung zur Wärmeabfuhr 14 dient dazu, die vom Kondensator 13 im Bereich der Akkuschnittstelle 4 abgegebene Wärme aufzunehmen und abzuleiten und dadurch den Akkupack 5 effektiv zu kühlen. Die Einrichtung zur Wärmeabfuhr ist in vorliegender Darstellung nicht näher spezifiziert und kann in verschiedener Weise ausgebildet sein, wie anhand der folgenden Figuren noch erläutert werden wird.

Wie der Figur 2 weiterhin noch entnehmbar ist, kann die Leiterplatte 9 eine Aussparung 16 aufweisen. Durch diese Aussparung 16 ist vorliegend der Wärmeüberträger 11, insbesondere eine Heatpipe, hindurchgeführt. Der Wärmeüberträger 11 kann hierdurch auf direktem Wege zur Akkuschnittstelle 4 geführt werden und konstruktiv einfach ausgeführt werden.

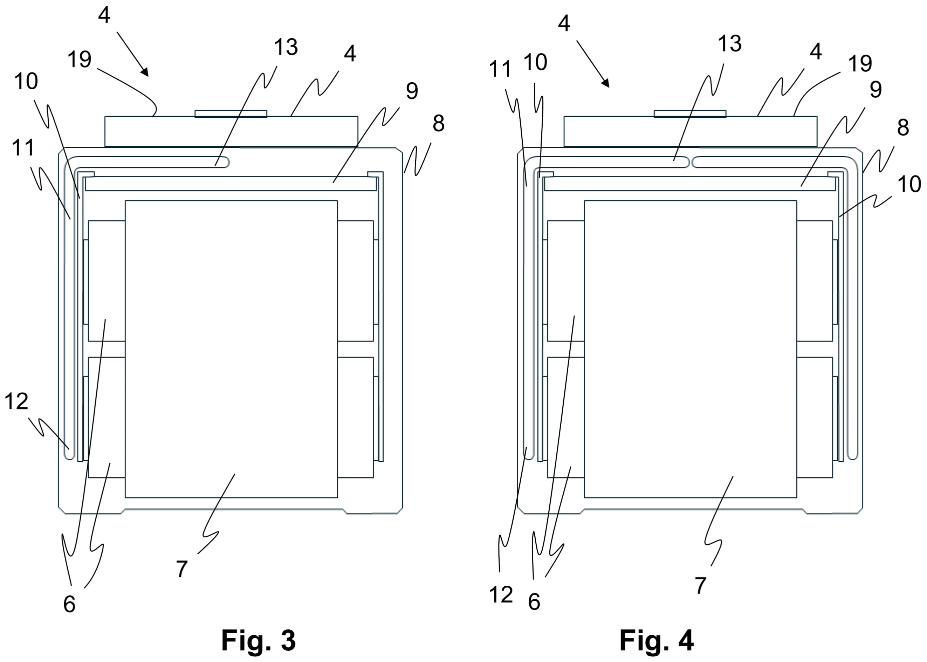

Figur 3 zeigt einen Akkupack 5 in einer schematischen, teilweise geschnittenen Darstellung. Der Akkupack 5 umfasst, wie bereits zu Figur 2 beschrieben, eine Vielzahl von Ackuzellen 6, die in einem Zellenträger 7 angeordnet und von einem Akkugehäuse 8 umgeben sind. An jeder der Stirnseiten der Akkuzellen 6 ist jeweils ein Leiterblech 15 angeordnet, das der elektrischen Kontaktierung der Akkuzellen 6 dient und diese elektrisch miteinander und mit der Leiterplatte 9 verbindet. Dabei sind je nach Verschaltung der Akkuzellen 6 in Reihenschaltung oder in Parallelschaltung oder kombiniert verschiedene Ausgestaltungen mit verschiedenen Anzahlen von Leiterblechen 15 denkbar. Insbesondere im Bereich der Leiterbleche 15 beziehungsweise im Bereich der Akkuzellenkontaktierungen wird während des Betriebs Wärme erzeugt.

Der Wärmeüberträger 11, genauer gesagt, der Verdampfer 12 des Wärmeüberträgers 11 ist deshalb zur verbesserten Wärmeaufnahme direkt im Bereich des oder der Leiterbleche 15 angeordnet, was vorliegend im linken Bereich der Figur 3 dargestellt ist. Die vom Verdampfer 12 des Wärmeüberträgers 11 aufgenommene Wärme wird sodann in den Bereich der Akkuschnittstelle 4 geführt. Dort wird die aufgenommene Wärme wiederum mittels des Kondensators 13 an die Akkuschnittstelle 4 abgegeben. Der Wärmeüberträger 11 ermöglicht hierdurch eine effektive Wärmeübertragung von dem wärmebelasteten Bereich des Leiterblechs 15 hin zu der Akkuschnittstelle 4. Diese Anordnung trägt zur thermischen Stabilität des Akkupacks 5 bei.

Gemäß vorliegendem Beispiel ist dabei der Wärmeüberträger 11 gebogen ausgeführt und seitlich an der Leiterplatte 9 vorbeigeführt. Es ist somit nicht unbedingt erforderlich, den Wärmeüberträger 11 durch die Leiterplatte 9 hindurchzuführen.

Figur 4 zeigt ähnlich wie die Figur 3 einen Akkupack 5 in einer schematischen, teilweise geschnittenen Darstellung. Im Unterschied zur Figur 3 umfasst der Akkupack 5 zwei Wärmeüberträger 11, die jeweils Teil der Kühleinrichtung 10 an dem Akkupack 5 sind. Die beiden Wärmeüberträger 11 bzw. Wärmerohre sind derart angeordnet, dass sie an beiden Stirnseiten der Akkuzellen 6 mit einem Leiterblech 15 in Kontakt stehen oder zumindest in der Lage sind, die von den Leiterblechen 15 und den Zellenkontaktierungen abgegebene Wärme aufzunehmen. Diese Anordnung ermöglicht eine effiziente Wärmeaufnahme an beiden Stirnseiten der Akkuzellen 6 und eine gezielte Wärmeabgabe im Bereich der Akkuschnittstelle 4.

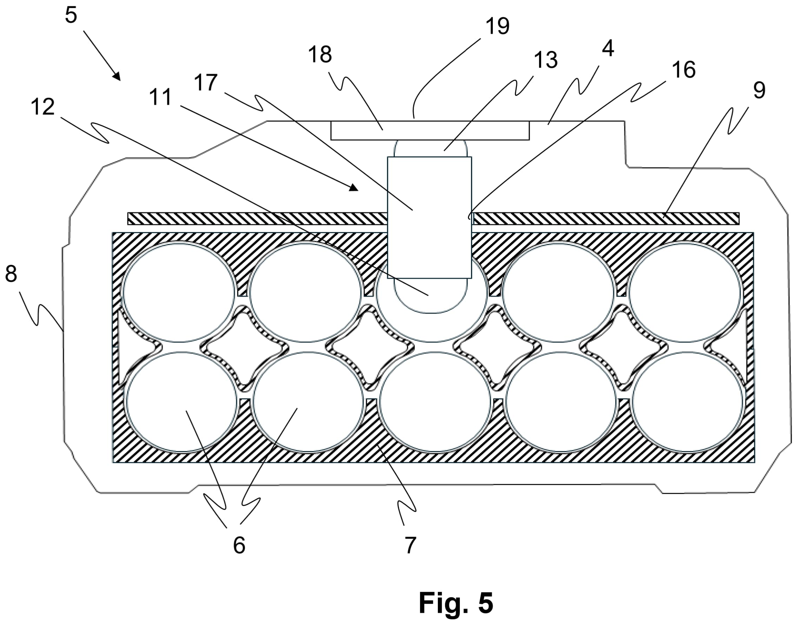

Figur 5 zeigt einen Akkupack 5 in einer schematischen, geschnittenen Darstellung nach einer alternativen Ausführung. Ebenso wie in Figur 2 ist der Wärmeüberträger 11 dabei derart angeordnet, dass er eine Aussparung 16 der Leiterplatte 9 durchdringt. Im Unterschied zu Figur 2 ist der Wärmeüberträger 11 zusätzlich mit einer äußeren Wärmeisolierung 17 versehen. Diese Wärmeisolierung 17 begrenzt die Wärmeabgabe im Bereich des Wärmerohes 11 zwischen dem Verdampfer 12 und dem Kondensator 13. Eine Erwärmung der Leiterplatte 9, welche zu Funktionsbeeinträchtigungen des Akkupacks 5 führen könnte, kann hierdurch vermieden werden. Zugleich wird die Effizienz der Wärmeübertragung zwischen dem Verdampfer 12 und dem Kondensator 13 erhöht.

Gemäß Figur 5 umfasst der Akkupack 5 außerdem ein Wärmeleitelement 18, das im Bereich der Akkuschnittstelle 4 angeordnet ist. Dieses Wärmeleitelement 18 dient dazu, die vom Kondensator 13 abgegebene Wärme gezielt an die Außenseite 19 der Akkuschnittstelle 4 sowie an die Einrichtung zur Wärmeabfuhr 14 des Arbeitsgerätes 2 (hier nicht dargestellt) weiterzuleiten.

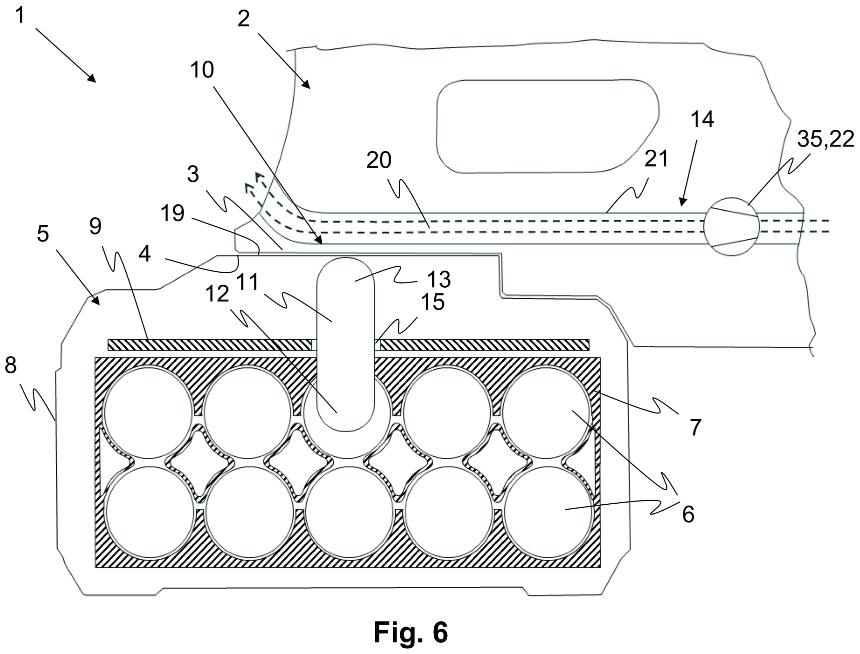

Figur 6 zeigt eine Anordnung 1 umfassend einen Akkupack 5 und ein Arbeitsgerät 2 sowie eine Kühleinrichtung 10 für den Akkupack 5 in einer schematischen, teilweise geschnittenen Darstellung. Die Kühleinrichtung 10 umfasst wie bereits zu den Figuren 2 - 5 beschrieben einen Wärmeüberträger 11 mit einem Verdampfer 12 und einem Kondensator 13. Der Kondensator 13 befindet sich wie auch bei den vorherigen Beispielen im Bereich der Akkuschnittstelle 4.

An oder in dem Arbeitsgerät 2 ist eine Einrichtung zur Wärmeabfuhr 14 vorgesehen. Die Einrichtung zur Wärmeabfuhr 14 umfasst vorliegend einen Luftführungskanal 21, der zumindest im Betrieb des Arbeitsgerätes 2 mit einem Kühlluftstrom 20 beaufschlagt wird. Dieser Kühlluftstrom 20 wird von einem Lüfter 22 erzeugt, der ebenfalls Teil der Einrichtung zur Wärmeabfuhr 14 ist. Der Luftführungskanal 21 leitet den Kühlluftstrom 20 so, dass die vom Kondensator 13 des Wärmeüberträgers 11 abgegebene Wärme effizient abgeführt wird. Der Kühlluftstrom 20 wird hierzu über oder durch die Geräteschnittstelle 3 geführt, welche wiederum mit der Akkuschnittstelle 4 in Kontakt steht. Der Kühlluftstrom 20 kann ein ohnehin an dem Arbeitsgerät 2 ausgebildeter Hauptluftstrom 34 (siehe Figur 1) in Form eines Kühlluftstromes 20 oder auch in Form eines Arbeitsluftstromes sein. In diesem Fall wird ein ohnehin vorhandener Lüfter 22 zur Erzeugung des Kühlluftstroms 20 benutzt. Der Kühlluftstrom 20 kann jedoch auch eigens für die Einrichtung zur Wärmeabfuhr 14 erzeugt werden, so dass die Einrichtung zur Wärmeabfuhr 14 einen eigenen Lüfter 22 als Strömungserzeuger 35 aufweist. Es ist weiterhin in der Figur 6 ersichtlich, dass der Kühlluftstrom 20 durch das Arbeitsgerätegehäuse 40 hindurchgeführt ist und aus diesem im Bereich der Akkuschnittstelle 4 beziehungsweise der Geräteschnittstelle 3 austritt.

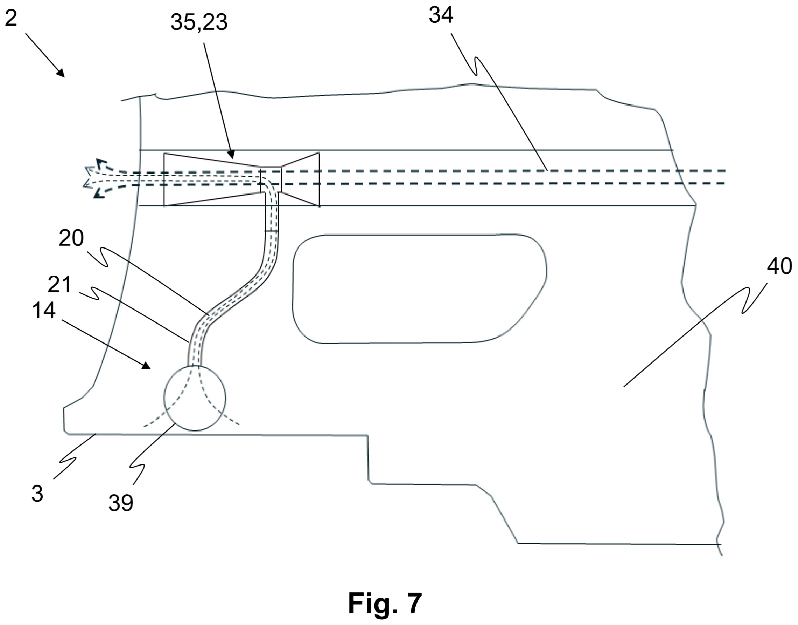

Figur 7 zeigt ein mobiles, elektrisches Arbeitsgerät 2 in einer schematischen, geschnittenen und abgebrochenen Darstellung nach einer weiteren Ausführung. Das Arbeitsgerät 2 umfasst wie bereits beschrieben eine Geräteschnittstelle 3, die zur lösbaren Verbindung mit einer Akkuschnittstelle 4 eines Akkupacks 5 (hier nicht dargestellt) ausgebildet ist. Ebenso wie bei der Darstellung der Figur 6 umfasst auch hier die Einrichtung zur Wärmeabfuhr 14 einen mit einem Kühlluftstrom 20 beaufschlagten Luftführungskanal 21.

Im Unterschied zur Figur 6 wird der Kühlluftstrom 20 jedoch nicht durch einen Lüfter 22 als Stromerzeuger 35 erzeugt, sondern mittels einer Venturidüse 23. Die Einrichtung zur Wärmeabfuhr 14 des Arbeitsgeräts 2 umfasst somit gemäß diesem Ausführungsbeispiel eine Venturidüse 23. Die Venturidüse 23 nutzt dabei einen ohnehin im Arbeitsgerät 2 vorhandenen Hauptluftstrom 34, welcher wie auch schon zu Figur 6 beschrieben sowohl ein Kühlluftstrom 20 als auch ein Arbeitsluftstrom sein kann. Der Kühlluftstrom 20 kann durch eine Öffnung 39 in dem Arbeitsgerätegehäuse 40 angesaugt werden, welche sich bevorzugt nahe der Geräteschnittstelle 3 befindet. Auch hierdurch kann eine verbesserte Wärmeabfuhr im Bereich der Geräteschnittstelle 3 erreicht werden.

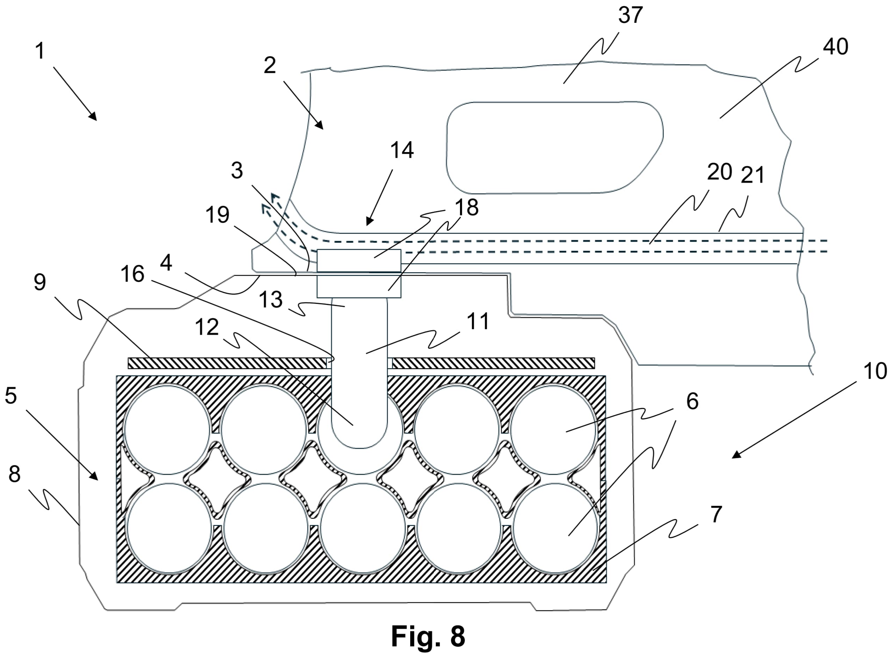

Figur 8 zeigt eine weitere Ausführung einer ein Arbeitsgerät 2, einen Akkupack 5 und eine Kühleinrichtung 10 für den Akkupack 5 umfassenden Anordnung 1 in einer schematischen, teilweise geschnittenen Darstellung. In vorliegender Darstellung sind dabei wiederum der Akkupack 5 und das Arbeitsgerät 2 in einem zusammengesteckten Zustand dargestellt, in welchem die Akkuschnittstelle 4 in die Geräteschnittstelle 3 eingreift. Erkennbar sind wiederum die Akkuzellen 6, welche in den Zellenträger 7 innerhalb des Akkugehäuses 8 aufgenommen sind. Ebenfalls ist auch wiederum eine zwischen den Akkuzellen 6 und der Akkuschnittstelle 4 angeordnete Leiterplatte 9 dargestellt. Zudem ist ebenso wie in Figur 5 dargestellt ein Wärmeüberträger 11 vorgesehen, welcher durch eine Aussparung 16 der Leiterplatte 9 geführt ist. Dargestellt sind weiterhin der Verdampfer 12, welcher im Bereich der Akkuzellen 6 beziehungsweise im Inneren des Akkupacks 5 angeordnet ist, sowie der Kondensator 13 des Wärmeüberträgers 11, welcher im Bereich der Akkuschnittstelle 4 angeordnet ist.

Der Akkupack 5 umfasst auch hier ein Wärmeleitelement 18, das im Bereich der Akkuschnittstelle 4 angeordnet ist. Dieses Wärmeleitelement 18 dient dazu, die von dem Kondensator 13 des Wärmeüberträgers 11 abgegebene Wärme gezielt an eine Einrichtung zur Wärmeabfuhr 14 des Arbeitsgerätes 2 weiterzuleiten. Die Einrichtung zur Wärmeabfuhr 14 umfasst auch hier einen Luftführungskanal 21, der zumindest im Betrieb des Arbeitsgerätes 2 mit einem Kühlluftstrom 20 beaufschlagt wird. Der Kühlluftstrom 20 unterstützt die effiziente Abführung der vom Kondensator 13 abgegebenen Wärme.

Die Erzeugung des Kühlluftstroms 20 ist hier nicht näher dargestellt und kann, wie bereits zu den anderen Figuren beschrieben, durch einen eigenen Lüfter 22, einen ohnehin bereits vorhandenen Lüfter 22 oder eine Venturidüse 23 erfolgen.

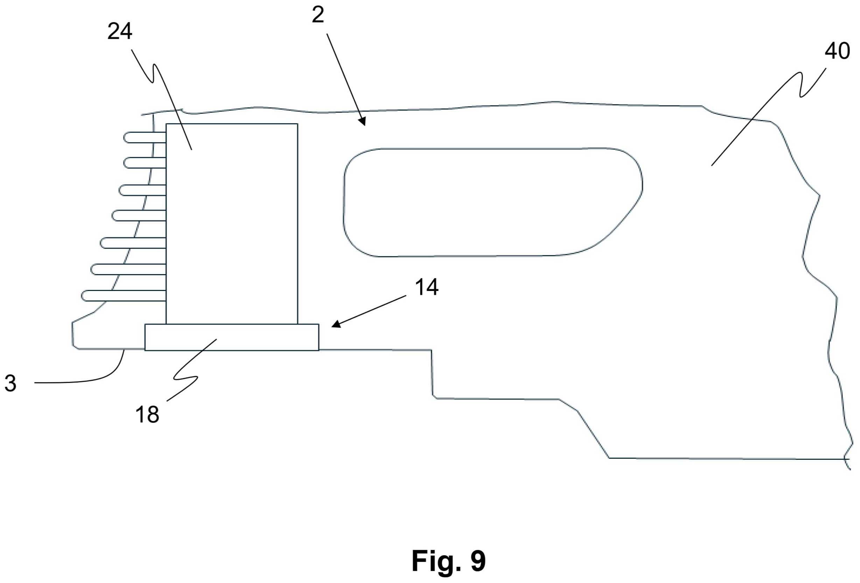

Gemäß dem vorliegenden Ausführungsbeispiel weist weiterhin auch die Einrichtung zur Wärmeabfuhr 14 ein Wärmeleitelement 18 auf. Dieses ist vorliegend im Bereich der Geräteschnittstelle 3 angeordnet und kann dadurch besonders gut mit dem im Bereich der Akkuschnittstelle 4 angeordneten Wärmeleitelement 18 des Akkupacks 5 zusammenwirken. Durch das weitere Wärmeleitelement 18 im Bereich der Geräteschnittstelle 3 kann die Wärmeabfuhr durch die Einrichtung 14 noch weiter verbessert werden. Gemäß vorliegendem Beispiel umfasst die Einrichtung zur Wärmeabfuhr 14 wiederum einen Luftführungskanal 21, in welchem ein Kühlluftstrom 20 geführt ist. Alternativ oder zusätzlich könnte jedoch das Wärmeleitelement 18 die Wärme auch an einen Kühlkörper 24 (siehe Figur 9) abführen. Es versteht sich, dass ein solches Wärmeleitelement 18 im Bereich der Geräteschnittstelle 3 des Arbeitsgerätes 2 auch ohne das Wärmeleitelement 18 an dem Akkupack 5 vorteilhaft für die Wärmeabfuhr sein kann. Beispielsweise kann die Wärme auch alleine durch den Kondensator des Wärmeüberträgers 11 nahezu bis an die Außenseite 19 oder bis an die Außenseite 19 der Akkuschnittstelle 4 geführt werden.

Figur 9 zeigt eine weitere Ausführung eines mobilen, elektrischen Arbeitsgerätes 2 in einer schematischen, geschnittenen und abgebrochenen Darstellung. Ebenso wie zu Figur 8 beschrieben umfasst die Einrichtung zur Wärmeabfuhr 14 des Arbeitsgeräts 2 ein im Bereich der Geräteschnittstelle 3 angeordnetes Wärmeleitelement 18. Im Unterschied zur Darstellung der Figur 8 wird das Wärmeleitelement 18 jedoch nicht von einem Kühlluftstrom 20 gekühlt. Vielmehr leitet das Wärmeleitelement 18 die von dem hier nicht dargestellten Kondensator 13 des Wärmeüberträgers 11 des Akkupacks 5 abgegebene Wärme an einen Kühlkörper 24 weiter. Der Kühlkörper 24 dient zur verbesserten Ableitung der Wärme und trägt zur thermischen Stabilität der Anordnung 1 bei.

Der Kühlkörper 24 reicht bis an die Außenseite des Arbeitsgerätegehäuses 40 und verfügt beispielsweise durch Rippen über eine große Oberfläche, welche eine effiziente Kühlung ermöglichen.

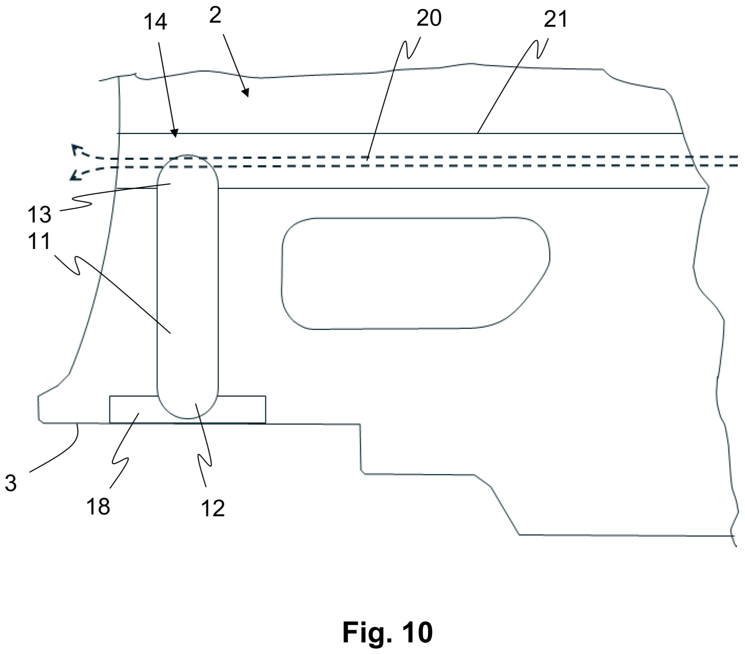

Figur 10 zeigt eine weitere Ausführung eines mobilen, elektrischen Arbeitsgeräts 2 in einer schematischen, geschnittenen und abgebrochenen Darstellung. Die Einrichtung zur Wärmeabfuhr 14 umfasst auch hier einen Luftführungskanal 21, welcher einen Kühlluftstrom 20 führt, der, wie zuvor anhand der Figuren 1 bis 9 beschrieben, in verschiedenster Weise erzeugt werden kann. Ebenso wie in Figur 9 dargestellt umfasst auch hier die Einrichtung zur Wärmeabfuhr 14 ein im Bereich der Geräteschnittstelle 3 angeordnetes Wärmeleitelement.

Zudem umfasst die Einrichtung zur Wärmeabfuhr 14 gemäß vorliegendem Beispiel ebenfalls einen Wärmeüberträger 11 mit einem Verdampfungs- und Kondensationskreislauf, insbesondere eine Heatpipe. Dieser Wärmeüberträger 11 leitet die vom Kondensator 13 des im Akkupack 5 angeordneten Wärmeüberträgers 11 mit einem Verdampfungs- und Kondensationskreislauf abgegebene Wärme an den Luftführungskanal 21 weiter. Hierdurch ist es in vorteilhafter Weise möglich, die Wärme beispielsweise zu einem ohnehin vorhandenen Hauptluftstrom 34 zu führen.

Alternativ zu der gezeigten Darstellung wäre es auch möglich, dass die Wärme nicht zu einem Luftführungskanal 21 geleitet wird, sondern zu einem Kühlkörper 24, welcher die aufgenommene Wärme dann an die Umgebung abgibt.

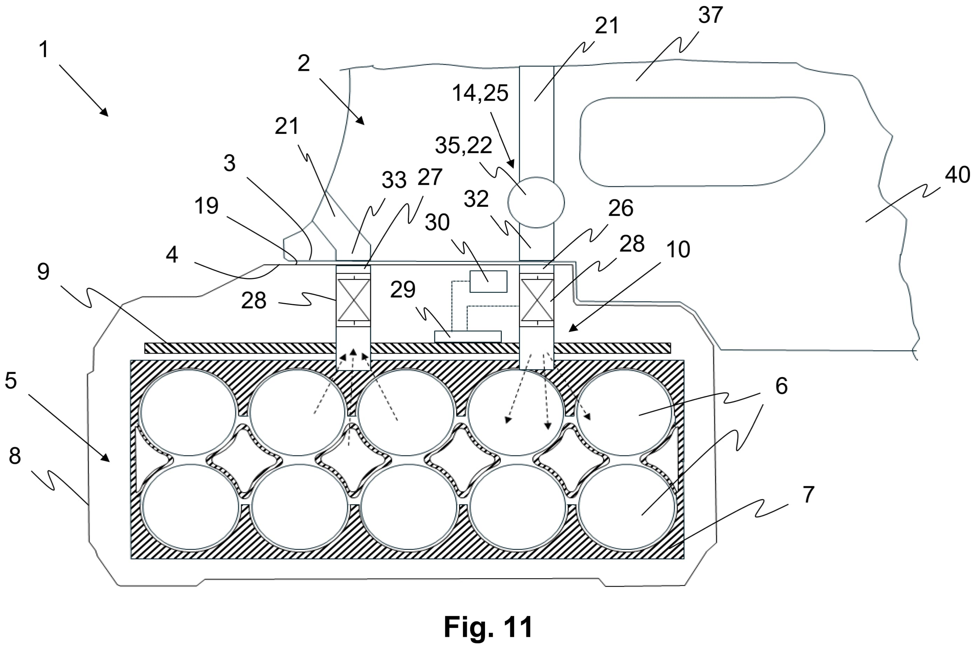

Figur 11 zeigt eine Anordnung 1 umfassend ein mobiles, elektrisches Arbeitsgerät 2 oder ein Ladegerät und einen Akkupack 5 in einer schematischen, teilweise geschnittenen Darstellung. Das Arbeitsgerät 2 ist dabei in abgebrochener Darstellung gezeigt und ist hier ebenfalls nicht näher spezifiziert. Dargestellt ist lediglich das Arbeitsgerätegehäuse 40, welches auch hier einen Griffabschnitt 37 aufweist. Das Arbeitsgerät 2 oder das Ladegerät ist mit einer Geräteschnittstelle 3 ausgestattet und der Akkupack 5 mit einer Akkuschnittstelle 4.

Der Akkupack 5 weist mehrere Akkuzellen 6 auf, die innerhalb eines Akkugehäuses 8 in einem Zellenträger 7 angeordnet sind. Im Inneren des Akkupacks 5 ist eine Leiterplatte 9 zwischen den Akkuzellen 6 und der Akkuschnittstelle 4 angeordnet, welche elektrisch mit den Akkuzellen 6 verbunden ist. Auf der Leiterplatte 9 befindet sich die Elektronik des Akkupacks 5. Die Akkuschnittstelle 4 ist ebenfalls elektrisch mit der Leiterplatte 9 verbunden und dient zudem der mechanischen Verbindung mit der Geräteschnittstelle 3 des Arbeitsgeräts 2.

Die Anordnung 1 umfasst weiterhin eine Kühleinrichtung 10 für den Akkupack 5, um die im Inneren des Akkupacks 5 entstehende Wärme effizient über die Akkuschnittstelle 4 und die Geräteschnittstelle 3 abzuführen. An dem Arbeitsgerät 2 umfasst die Kühleinrichtung 10 für den Akkupack 5 eine an oder in dem Arbeitsgerät 2 angeordnete Einrichtung zur Wärmeabfuhr 14. Diese Einrichtung zur Wärmeabfuhr 14 dient dazu, die vom Akkupack 5 im Bereich der Akkuschnittstelle 4 abgegebene Wärme aufzunehmen und abzuleiten. Die Einrichtung zur Wärmeabfuhr 14 umfasst an dem Arbeitsgerät 2 oder dem Ladegerät ein Fluidkühlsystem 25. Dieses kann sowohl ein offenes Fluidkühlsystem 25 sein als auch einen geschlossenen Kühlkreislauf beinhalten. Weiterhin kann das Fluidkühlsystem 25 mit Luft, einem anderen Gas, Wasser, Öl oder einer dielektrischen Flüssigkeit als Kühlfluid betrieben sein. Das Fluidkühlsystem 25 weist einen in allgemeiner Weise mit 35 bezeichneten Strömungserzeuger auf.

Gemäß vorliegendem Beispiel ist das Fluidkühlsystem 25 ein Luftkühlsystem, bei welchem mittels eines Lüfters 22 Kühlluft durch Luftführungskanäle 21 des Arbeitsgerätegehäuses 40 geführt wird.

Wie der Figur 11 weiterhin entnehmbar, umfasst die Kühleinrichtung 10 an dem Akkupack 5 zum Anschluss an das Fluidkühlsystem 25 des Arbeitsgeräts 2 eine Einströmöffnung 26 und eine Ausströmöffnung 27 für das Kühlfluid. Hierdurch ist es möglich, das Kühlfluid durch die Einströmöffnung 26 in den Akkupack 5 einzuleiten und durch die Ausströmöffnung 27 aus dem Akkupack 5 auszuleiten. Dadurch, dass das Kühlfluid durch den Akkupack 5 geleitet wird, kann die im Inneren des Akkupacks 5 entstehende Wärme effizient abgeführt werden.

Der Akkupack 5 umfasst wenigstens ein elektrisch ansteuerbares Ventil 28, das zum Verschließen der Einströmöffnung 26 und/oder der Ausströmöffnung 27 dient. Eine Steuereinheit 29 im Akkupack 5 ist dazu ausgebildet, das Ventil 28 in Abhängigkeit von einer Detektionseinrichtung 30 zu steuern. Die Detektionseinrichtung 30 erkennt, ob die Akkuschnittstelle 4 des Akkupacks 5 mit der Geräteschnittstelle 3 des Arbeitsgeräts 2 oder des Ladegeräts verbunden ist. Erkennt die Detektionseinrichtung 30 ein Arbeitsgerät 2 oder ein Ladegerät, so gibt sie ein entsprechendes Signal (siehe gepunktete Linie) an die Steuereinheit 29, welche das elektrisch ansteuerbare Ventil 28 ansteuert (siehe gepunktete Linie) und öffnet. Erkennt die Detektionseinrichtung 30 hingegen kein Arbeitsgerät 2 oder Ladegerät, so schließt die Steuereinheit 29 das elektrisch ansteuerbare Ventil 28 beziehungsweise hält sie geschlossen.

Gemäß vorliegendem Beispiel ist die Einströmöffnung 26 mit einem elektrisch ansteuerbaren Ventil 28 versehen. Sobald das Ventil 28 geöffnet ist, kann das Kühlfluid durch die Einstromöffnung 26 in das Innere des Akkupacks 5 einströmen, wie durch drei gestrichelte Pfeile symbolisiert ist.

Die Ausströmöffnung 27 ist gemäß vorliegendem Beispiel hingegen lediglich mit einem einfachen Ventil 28 versehen, welches beispielsweise durch Federkraft geschlossen werden kann und durch den Fluidstrom geöffnet werden kann. Durch die Ausströmöffnung 27 kann das Kühlfluid den Akkupack 5 wieder verlassen, wie ebenfalls durch drei gestrichelte Pfeile dargestellt ist. Ebenso ist es jedoch möglich, auch die Ausströmöffnung 27 mit einem elektrisch ansteuerbaren Ventil 28 zu versehen. Zudem wäre es denkbar, die Einströmöffnung 26 und die Ausströmöffnung 27 zusammenzufassen und mit einem gemeinsamen, elektrisch ansteuerbaren Ventil 28 zu versehen.

Um das Kühlfluid dem Akkupack 5 zuzuführen, weist das Arbeitsgerät 2 eine Zuführöffnung 32 auf, welche sich in einer Flucht mit der Einströmöffnung 26 des Akkupacks 5 befindet, wenn der Akkupack 5 mit seiner Akkuschnittstelle 4 an die Geräteschnittstelle 3 des Arbeitsgeräts 2 oder des Ladegerätes angeschlossen ist. Ebenso weist das Arbeitsgerät 2 eine Abführöffnung 33 auf, welche sich in einer Flucht mit der Ausströmöffnung 27 des Akkupacks 5 befindet, wenn der Akkupack 5 mit seiner Akkuschnittstelle 4 an die Geräteschnittstelle 3 des Arbeitsgeräts 2 oder des Ladegerätes angeschlossen ist.

Gemäß der vorliegend gezeigten Darstellung ist das Fluidkühlsystem 25 ein offenes Kühlsystem. Hierdurch könnte beispielsweise Luft als Kühlfluid in das Innere des Akkupacks 5 geleitet werden. Um das Eindringen von Verunreinigungen in empfindliche Bereiche des Akkupacks zu vermeiden, ist vorteilhafterweise eine hier nicht dargestellte Ansaugöffnung an dem Arbeitsgerät 2 und/oder die Einströmöffnung 26 des Akkupacks 5 mit einem Filterelement (nicht dargestellt) versehen.

Nach einer anderen, hier nicht dargestellten Ausführung könnte das Kühlfluid auch eine dielektrische Flüssigkeit sein. Mittels einer solchen dielektrischen Flüssigkeit ist es möglich, auch empfindliche Bauteile sowie Elektronikbauteile direkt zu umspülen und dadurch zu kühlen. Das Fluidkühlsystem 25 würde in diesem Fall bevorzugt einen geschlossenen Kühlkreislauf umfassen. Dieser kann, ähnlich wie in der folgenden Figur Ziffer 12 gezeigt, einen Strömungserzeuger 35 sowie einen Kühler 38 aufweisen. Diese direkte Umspülung der wärmebelasteten Bereiche im Inneren des Akkupacks 5 ermöglicht eine besonders gute Kühlwirkung.

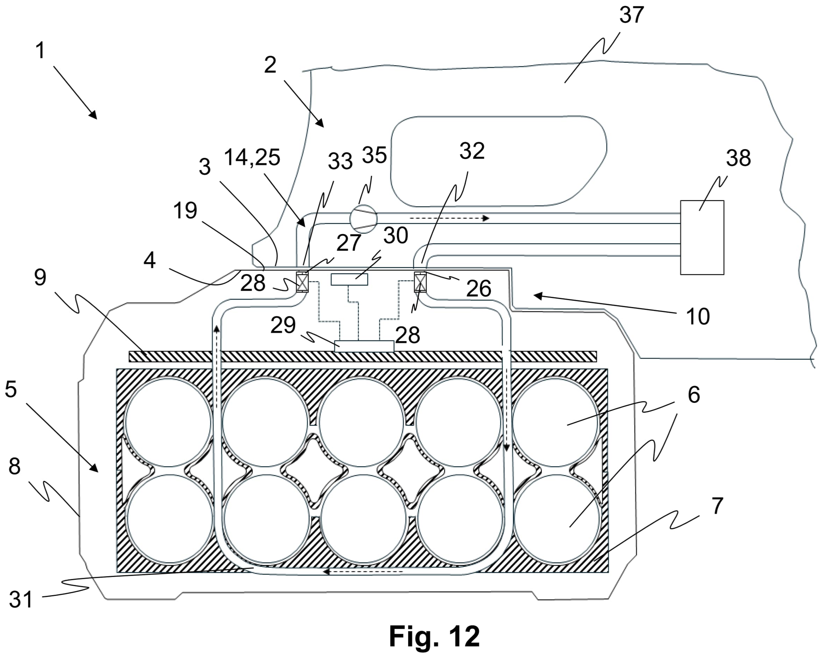

Figur 12 zeigt schließlich noch eine weitere Ausführung einer Anordnung 1 in einer schematischen, teilweise geschnittenen Darstellung. Die Anordnung 1 umfasst ein mobiles, elektrisches Arbeitsgerät 2 oder ein Ladegerät mit einer Geräteschnittstelle 3 sowie einen Akkupack 5, der mit einer Akkuschnittstelle 4 ausgestattet ist. Die Anordnung 1 ist ebenso wie die der Figur 11 mit einer Kühleinrichtung 10 ausgestattet, die ein Fluidkühlsystem 25 umfasst. Der Akkupack 5 beinhaltet eine Einströmöffnung 26 und eine Ausströmöffnung 27 für ein Kühlfluid, wobei der Akkupack 5 jeweils ein elektrisch ansteuerbares Ventil 28 zum Verschließen der Öffnungen 26 und 27 aufweist. Ebenso weist der Akkupack 5 eine Steuereinheit 29 auf, die das Ventil 28 steuert. Die Steuereinheit 29 arbeitet wie zu Figur 11 beschrieben mit einer Detektionseinrichtung 30 zusammen, die erkennt, ob der Akkupack 5 mit dem Arbeitsgerät 2 oder dem Ladegerät verbunden ist.

Im Unterschied zur Figur 11 umfasst der Akkupack 5 einen oder mehrere Kühlkanäle 31, die vom Kühlfluid durchströmt werden können. Die Kühlkanäle 31 können hierdurch ebenso durch die besonders wärmebelasteten Bereiche geführt werden und hierdurch zur effizienten Kühlung des Akkupacks beitragen. Vorteilhaft dabei ist es zudem, dass das Kühlfluid nicht direkt in Berührung mit elektrischen oder elektronischen Bauteilen kommt. Es ist hierdurch möglich, auch Wasser als Kühlfluid zu verwenden. Auch alle anderen Kühlfluide kommen ebenfalls in Frage, da keine direkte Umspülung der Ackuzellen 6 und/oder der Leiterbleche 15 sowie der Leiterplatte 9 erfolgt.

Das Fluidkühlsystem 25 im Arbeitsgerät 2 umfasst weiterhin einen Strömungserzeuger 35, insbesondere eine Pumpe, welche das Kühlfluid durch das Fluidkühlsystem 25 pumpt, wie durch den gestrichelten Pfeil symbolisiert ist. Weiterhin ist vorliegend noch ein Kühler 38 zum Kühlen des Kühlfluids vorgesehen.

Die vorliegende Erfindung ist nicht auf die dargestellten und beschriebenen Ausführungsbeispiele beschränkt. Abwandlungen im Rahmen der Patentansprüche sind ebenso möglich.

### Bezugszeichenliste

- 1: Anordnung
- 2: Arbeitsgerät
- 3: Geräteschnittstelle
- 4: Akkuschnittstelle
- 5: Akkupack
- 6: Akkuzelle
- 7: Zellenträger
- 8: Akkugehäuse
- 9: Leiterplatte
- 10: Kühleinrichtung
- 11: Wärmeüberträger mit Verdampfungs- und Kondensationskreislauf
- 12: Verdampfer
- 13: Kondensator
- 14: Einrichtung zur Wärmeabfuhr
- 15: Leiterblech
- 16: Aussparung
- 17: Wärmeisolierung
- 18: Wärmeleitelement
- 19: Außenseite der Akkuschnittstelle
- 20: Kühlluftstrom
- 21: Luftführungskanal
- 22: Lüfter
- 23: Venturidüse
- 24: Kühlkörper
- 25: Fluidkühlsystem
- 26: Einströmöffnung
- 27: Ausströmöffnung
- 28: Ventil
- 29: Steuereinheit
- 30: Detektionseinrichtung
- 31: Kühlkanal
- 32: Zuführöffnung
- 33: Abführöffnung
- 34: Hauptluftstrom
- 35: Strömungserzeuger
- 36: Antrieb
- 37: Griffabschnitt
- 38: Kühler
- 39: Öffnung
- 40: Arbeitsgerätegehäuse
- 41: Blasdüse

## Patentansprüche

1. Anordnung (1) umfassend
ein mobiles, elektrisches Arbeitsgerät (2), insbesondere eine elektrische Handwerkzeugmaschine zur Durchführung von Garten-, Reinigungs- oder Handwerksarbeiten, mit einer Geräteschnittstelle (3) zur lösbaren Verbindung mit einer Ackuschnittstelle (4) eines Akkupacks (5),
wenigstens einen vorzugsweise wasserdichten Akkupack (5), wobei der Akkupack (5) eine Vielzahl von Akkuzellen (6), welche in einem Zellenträger (7) in einem Akkugehäuse (8) aufgenommen sind, eine Leiterplatte (9) sowie eine Akkuschnittstelle (4) zur lösbaren Verbindung mit der Geräteschnittstelle (3) des elektrischen Arbeitsgerätes (2) aufweist,
sowie eine Kühleinrichtung (10) für den Akkupack (5),
**dadurch gekennzeichnet,**
**dass** die Kühleinrichtung (10)
wenigstens einen in dem Akkupack (5) angeordneten Wärmeüberträger (11) mit einem Verdampfungs- und Kondensationskreislauf, insbesondere eine Heatpipe, aufweist,
wobei ein Verdampfer (12) des Wärmeüberträgers (11) zur Aufnahme von Wärme in einem wärmebelasteten Bereich im Inneren des Akkupacks (5) angeordnet ist
und wobei ein Kondensator (13) des Wärmeüberträgers (11) zur Abgabe der aufgenommenen Wärme im Bereich der Akkuschnittstelle (4) angeordnet ist,
und **dass** die Kühleinrichtung (10) wenigstens eine an oder in dem mobilen, elektrischen Arbeitsgerät (2) angeordnete Einrichtung zur Wärmeabfuhr (14) von dem Kondensator (13) des Wärmeüberträgers (11) aufweist.

2. Anordnung (1) nach dem vorhergehenden Anspruch, **dadurch gekennzeichnet, dass** die Leiterplatte (9) zwischen den Akkuzellen (6) und der Akkuschnittstelle (4) angeordnet ist und dass die Leiterplatte (9) eine Aussparung (16) aufweist, durch welche der Wärmeüberträger (11) hindurchgeführt ist.

3. Anordnung (1) nach einem der vorhergehenden Ansprüche, **dadurch gekennzeichnet, dass** der Wärmeüberträger (11) eine äußere Wärmeisolierung (17) umfasst.

4. Anordnung (1) nach einem der vorhergehenden Ansprüche, **dadurch gekennzeichnet, dass** im Bereich der Akkuschnittstelle (4) ein Wärmeleitelement (18) angeordnet ist, welches die aufgenommene Wärme von dem Kondensator (13) an eine Außenseite (19) der Akkuschnittstelle (4) und/oder an die Einrichtung zur Wärmeabfuhr (14) an oder in dem mobilen, elektrischen Arbeitsgerät (2) weiterleitet.

5. Anordnung (1) nach einem der vorhergehenden Ansprüche, **dadurch gekennzeichnet, dass** die Einrichtung zur Wärmeabfuhr (14) an oder in dem mobilen, elektrischen Arbeitsgerät (2) einen zumindest im Betrieb des Arbeitsgerätes (2) mit einem Kühlluftstrom (20) beaufschlagbaren Luftführungskanal (21) umfasst.

6. Anordnung (1) nach einem der vorhergehenden Ansprüche, **dadurch gekennzeichnet, dass** die Einrichtung zur Wärmeabfuhr (14) an oder in dem mobilen, elektrischen Arbeitsgerät (2) einen Lüfter (22) zur Erzeugung des Kühlluftstroms (20) umfasst und/oder dass die Einrichtung zur Wärmeabfuhr (14) an oder in dem mobilen, elektrischen Arbeitsgerät (2) eine Venturidüse (23) zur Erzeugung des Kühlluftstroms (20) umfasst.

7. Anordnung (1) nach einem der vorhergehenden Ansprüche, **dadurch gekennzeichnet, dass** die Einrichtung zur Wärmeabfuhr (14) an oder in dem mobilen, elektrischen Arbeitsgerät (2) ein (weiteres,) zumindest teilweise im Bereich der Geräteschnittstelle (3) angeordnetes, Wärmeleitelement (18) umfasst, wobei vorzugsweise das weitere Wärmeleitelement (18) die aufgenommene Wärme einem Kühlkörper (24) zuführt, und/oder dass die Einrichtung zur Wärmeabfuhr (14) an oder in dem mobilen, elektrischen Arbeitsgerät (2) einen weiteren Wärmeüberträger (11) mit einem Verdampfungs- und Kondensationskreislauf, insbesondere eine Heatpipe, aufweist, wobei vorzugsweise der weitere Wärmeüberträger (11) die aufgenommene Wärme dem Kühlkörper (24) oder einem Luftführungskanal (21) im Inneren des Arbeitsgerätes (2) zuführt.

8. Anordnung (1), insbesondere Anordnung (1) nach einem oder mehreren der vorhergehenden Ansprüche, umfassend
ein mobiles, elektrisches Arbeitsgerät (2), insbesondere eine elektrische Handwerkzeugmaschine zur Durchführung von Garten-, Reinigungs- oder Handwerksarbeiten, oder ein Ladegerät mit einer Geräteschnittstelle (3) zur lösbaren Verbindung mit einer Akkuschnittstelle (4) eines Akkupacks (5),
wenigstens einen Akkupack (5), wobei der Akkupack (5) eine Vielzahl von Ackuzellen (6), welche in einem Zellenträger (7) in einem Akkugehäuse (8) aufgenommen sind, eine Leiterplatte (9) sowie eine Akkuschnittstelle (4) zur lösbaren Verbindung mit der Geräteschnittstelle (3) des elektrischen Arbeitsgerätes (2) oder des Ladegerätes aufweist,
sowie eine Kühleinrichtung (10) für den Akkupack (5),
wobei die Kühleinrichtung (10) an dem Arbeitsgerät (2) oder dem Ladegerät ein Fluidkühlsystem (25) umfasst
und wobei die Kühleinrichtung (10) an dem Akkupack (5) zum Anschluss an das Fluidkühlsystem (25) des Arbeitsgeräts (2) eine Einströmöffnung (26) und eine Ausströmöffnung (27) für ein Kühlfluid umfasst,
**dadurch gekennzeichnet,**
**dass** der Akkupack (5) wenigstens ein elektrisch ansteuerbares Ventil (28) zum Verschließen der Einströmöffnung (26) und/oder der Ausströmöffnung (27) aufweist,
und **dass** der Akkupack (5) eine Steuereinheit (29) zur Ansteuerung des wenigstens einen Ventils (28) und eine Detektionseinrichtung (30) aufweist, welche detektiert, ob die Akkuschnittstelle (4) des Akkupacks (5) an die Geräteschnittstelle (3) des Arbeitsgeräts (2) oder des Ladegeräts angeschlossen ist,
wobei die Steuereinheit (29) ausgebildet ist, das wenigstens eine Ventil (28) zu schließen, wenn durch die Detektionseinrichtung (30) kein Arbeitsgerät (2) oder Ladegerät erkannt wird und das wenigstens eine Ventil (28) zu öffnen, wenn durch die Detektionseinrichtung (30) ein Arbeitsgerät (2) oder Ladegerät erkannt wird.

9. Anordnung (1) nach dem vorhergehenden Anspruch, **dadurch gekennzeichnet, dass** der Akkupack (5) einen oder mehrere Kühlkanäle (31) für das Durchströmen des Kühlfluids aufweist, wobei vorzugsweise das Kühlfluid Wasser oder eine dielektrische Flüssigkeit ist, welche die Akkuzellen (6) und/oder die Leiterbleche (15) in dem Akkupack (5) direkt umspült.

10. Anordnung (1) nach einem der vorhergehenden Ansprüche, **dadurch gekennzeichnet, dass** das Arbeitsgerät (2) eine Zuführöffnung (32) zum Zuführen des Kühlfluids an die Einströmöffnung (26) des Akkupacks (5) und eine Abführöffnung (33) zum Abführen des Kühlfluids von der Ausströmöffnung (27) des Akkupacks (5) aufweist, wobei vorzugsweise das Arbeitsgerät (2) wenigstens ein weiteres Ventil (28) zum Verschließen der Zuführöffnung (32) und/oder der Abführöffnung (33) aufweist.

11. Akkupack (5), vorzugsweise wasserdichter Akkupack (5), für ein mobiles, elektrisches Arbeitsgerät (2), insbesondere eine elektrische Handwerkzeugmaschine zur Durchführung von Garten-, Reinigungs- oder Handwerksarbeiten,
wobei der Akkupack (5) eine Vielzahl von Akkuzellen (6), welche in einem Zellenträger (7) in einem Akkugehäuse (8) aufgenommen sind, eine Leiterplatte (9) sowie eine Akkuschnittstelle (4) zur lösbaren Verbindung mit einer Geräteschnittstelle (3) des elektrischen Arbeitsgerätes (2) aufweist,
sowie mit Teilen einer Kühleinrichtung (10) für den Akkupack (5),
**dadurch gekennzeichnet,**
**dass** als Teil der Kühleinrichtung (10) in dem Akkupack (5) wenigstens ein Wärmeüberträger (11) mit einem Verdampfungs- und Kondensationskreislauf, insbesondere eine Heatpipe, angeordnet ist,
wobei ein Verdampfer (12) des Wärmeüberträgers (11) zur Aufnahme von Wärme in einem wärmebelasteten Bereich im Inneren des Akkupacks (5) angeordnet ist
und wobei ein Kondensator (13) des Wärmeüberträgers (11) zur Abgabe der aufgenommenen Wärme im Bereich der Akkuschnittstelle (4) angeordnet ist.

12. Akkupack (5), vorzugsweise wasserdichter Akkupack (5), für ein mobiles, elektrisches Arbeitsgerät (2), insbesondere eine elektrische Handwerkzeugmaschine zur Durchführung von Garten-, Reinigungs- oder Handwerksarbeiten,
wobei der Akkupack (5) eine Vielzahl von Akkuzellen (6), welche in einem Zellenträger (7) in einem Akkugehäuse (8) aufgenommen sind, eine Leiterplatte (9) sowie eine Akkuschnittstelle (4) zur lösbaren Verbindung mit einer Geräteschnittstelle (3) des elektrischen Arbeitsgerätes (2) oder eines Ladegerätes aufweist, sowie mit Teilen einer Kühleinrichtung (10) für den Akkupack (5),
wobei die Kühleinrichtung (10) an dem Akkupack (5) zum Anschluss an ein Fluidkühlsystem (25) des Arbeitsgeräts (2) eine Einströmöffnung (26) und eine Ausströmöffnung (27) für ein Kühlfluid umfasst,
**dadurch gekennzeichnet,**
**dass** der Akkupack (5) wenigstens ein elektrisch ansteuerbares Ventil (28) zum Verschließen der Einströmöffnung (26) und/oder der Ausströmöffnung (27) aufweist,
und **dass** der Akkupack (5) eine Steuereinheit (29) zur Ansteuerung des wenigstens einen Ventils (28) und eine Detektionseinrichtung (30) aufweist, welche detektiert, ob die Akkuschnittstelle (4) des Akkupacks (5) an die Geräteschnittstelle (3) des Arbeitsgeräts (2) oder des Ladegeräts angeschlossen ist,
wobei die Steuereinheit (29) ausgebildet ist, das wenigstens eine Ventil (28) zu schließen, wenn durch die Detektionseinrichtung (30) kein Arbeitsgerät (2) oder Ladegerät erkannt wird und das wenigstens eine Ventil (28) zu öffnen, wenn durch die Detektionseinrichtung (30) ein Arbeitsgerät (2) oder Ladegerät erkannt wird.

13. Akkupack (5) nach einem der beiden vorhergehenden Ansprüche, **gekennzeichnet durch** eines oder mehrere der in den Ansprüchen 2 - 7 oder 9 - 10 beschriebenen und den Akkupack (5) betreffenden Merkmale.

14. Mobiles, elektrisches Arbeitsgerät (2), insbesondere elektrische Handwerkzeugmaschine zur Durchführung von Garten-, Reinigungs- oder Handwerksarbeiten, mit einer Geräteschnittstelle (3) zur lösbaren Verbindung mit einer Akkuschnittstelle (4) eines Akkupacks (5)
sowie mit Teilen einer Kühleinrichtung (10) für den Akkupack (5),
**dadurch gekennzeichnet,**
**dass** als Teil der Kühleinrichtung (10) wenigstens eine Einrichtung zur Wärmeabfuhr (14) im Bereich der Geräteschnittstelle (3) an oder in dem mobilen, elektrischen Arbeitsgerät (2) angeordnet ist.

15. Mobiles, elektrisches Arbeitsgerät (2) nach dem vorherigen Anspruch, **gekennzeichnet durch** eines oder mehrere der in den Ansprüchen 2 - 7 oder 9 - 10 beschriebenen und das Arbeitsgerät (2) betreffenden Merkmale.
